# EUROPÄISCHE PATENTANMELDUNG

(11) **EP 2 602 780 A2**
(43) Veröffentlichungstag der Anmeldung: **12.06.2013**
(21) Anmeldenummer: 12194023.3
(22) Anmeldetag: 23.11.2012
(51) Int. Cl.: G09B 19/12, G09B 1/00

(54) **Vorrichtung mit Anzeige eines Zeitdatenstrangs und einem Markierungsmittel**

(30) Priorität: 10.12.2011 DE 102011120770
(71) Anmelder: Werner Bauser GmbH, 78564 Wehingen (DE)
(72) Erfinder: Bauser, Michael, 78564 Wehingen (DE)
(74) Vertreter: Daub, Thomas

(57) **Zusammenfassung**

Die Erfindung betrifft eine Vorrichtung mit zumindest einem Zeitdatenstrang (12; 12a, 13a; 1 2b; 12c) und zumindest einem Markierungsmittel (14; 14a, 15a; 14b; 14c), wobei das zumindest eine Markierungsmittel (14; 14a, 15a; 14b; 14c) dazu vorgesehen ist, mit dem zumindest einen Zeitdatenstrang (12; 12a, 13a; 12b; 12c) verbunden zu werden und/oder zumindest ein Zeitdatum (16; 16a, 17a; 16b; 16c) des Zeitdatenstrangs (12; 12a, 13a; 12b; 12c) zu markieren.

## Beschreibung

### Stand der Technik

Die Erfindung betrifft eine Vorrichtung nach Anspruch 1.

Es sind Kalender in verschiedenen Formen bekannt.

Durch die erfindungsgemäße Ausgestaltung kann vorteilhaft eine Aufgabenplanung vereinfacht werden.

Die Erfindung umfasst eine Vorrichtung mit zumindest einem Zeitdatenstrang und zumindest einem Markierungsmittel, wobei das zumindest eine Markierungsmittel dazu vorgesehen ist, mit dem zumindest einen Zeitdatenstrang verbunden zu werden und/oder zumindest ein Zeitdatum des Zeitdatenstrangs zu markieren. Insbesondere ist die Vorrichtung zu einer Aufgabenplanung und/oder einer Aufgabenkontrolle vorgesehen. Unter einem "Zeitdatenstrang" soll insbesondere ein Bauteil, insbesondere eine Kette von Bauteilen, insbesondere Zeitdatenmodulen, verstanden werden, auf dem zumindest ein Zeitdatum, insbesondere eine Folge von zusammengehörigen Zeitdaten, vorzugsweise in einer Reihe, angeordnet ist. Die Zeitdaten wiedergebenden Symbole, insbesondere Buchstaben und/oder Ziffern, sind dabei aus einem anderen Material, insbesondere einem Lack, vorzugsweise einem Material anderer Farbe als der des Bauteils, gebildet. Insbesondere sind die Bauteile auf einem Grundkörper angeordnet. Insbesondere unterscheidet sich eine Anordnung der Zeitdaten von einer Anordnung in einer Tabelle mit mehr als einer Spalte und/oder mehr als einer Zeile. Insbesondere sind die Zeitdaten entlang einer Linie, insbesondere entlang einer geschwungenen und/oder abgeknickten Linie und/oder einer Spirale, vorzugsweise entlang einer Geraden und/oder entlang einem Rand einer geometrischen, vorzugsweise zweidimensionalen Figur, insbesondere eines Kreises und/oder eines Rechtecks, angeordnet. Insbesondere ist der Zeitdatenstrang als Leiste ausgebildet. Vorzugsweise beträgt ein Verhältnis von einem Betrag einer Differenz zweier Abstände zwischen beliebigen zwei benachbarten Zeitdaten entlang der Linie zu einer Summe der Abstände maximal 0,35, insbesondere maximal 0,2, vorteilhaft maximal 0,1, vorzugsweise maximal 0,05. Vorzugsweise sind die Zeitdaten regelmäßig entlang der Linie angeordnet. Unter einer "Folge zusammengehöriger Zeitdaten" soll insbesondere eine abstrakte Folge von zumindest zwei Zeitdaten, insbesondere von Zeitdaten einer Woche, eines Monats, eines Jahres und/oder mehrerer Jahre, nach einem Kalender, insbesondere dem Gregorianischen Kalender, verstanden werden, die vorzugsweise unabhängig sind von einem bestimmten Jahr, einem bestimmten Monat und/oder einer bestimmten Woche. Insbesondere handelt es sich dabei um eine Folge von Wochentagen, insbesondere von Werktagen, vorzugsweise in üblicher Reihenfolge nach ISO 6801, eine Folge von Kalenderwochen, vorzugsweise in aufsteigender Nummerierung, um eine Folge von Tagen, insbesondere von 31 Tagen, eines Monats, um eine Folge von Monaten, vorzugsweise in Reihenfolge von Januar bis Dezember oder in abstrakter Form von 1 bis 12, oder um eine Folge von Jahren, insbesondere von zumindest drei, insbesondere zumindest vier, vorteilhaft zumindest sechs, vorzugsweise zumindest zehn Jahren, die vorzugsweise aufeinander folgen. Zwischen aufeinander folgenden Zeitdaten der Zeitdatenleiste liegt insbesondere ein Zeitraum, der länger ist als eine typische Länge des Zeitdatums, insbesondere eine Zeit, die länger ist als ein Tag, wenn das Zeitdatum einen Tag repräsentiert, länger ist als eine Woche, wenn das Zeitdatum eine Woche repräsentiert, länger ist als ein Monat, wenn das Zeitdatum einen Monat repräsentiert. Beispielsweise folgt so auf dem Zeitdatenstrang ein Tag, der von einem Dienstag verschieden ist, auf einen Montag. Neben Ausgestaltungen, basierend auf dem Gregorianischen Kalender, sind entsprechende Ausgestaltungen auf Basis eines anderen, dem Fachmann als geeignet erscheinenden Kalenders, insbesondere eines Mondkalenders und/oder eines Sonnenkalenders und/oder eines religiösen Kalenders, denkbar. Insbesondere können Zeitdaten auf dem Zeitdatenstrang durch einen Bediener festgelegt werden, wobei insbesondere zumindest ein Beschriftungsfeld vorgesehen ist und/oder Zeitdaten auf austauschbaren Modulen angeordnet sind. Unter einem "Markierungsmittel" soll insbesondere ein Mittel verstanden werden, das dazu vorgesehen ist, etwas vorzugsweise zerstörungsfrei und insbesondere wiederholbar zu markieren. Insbesondere ist das Markierungsmittel dazu vorgesehen, ein Zeitdatum für einen nächsten Termin der Durchführung einer Aufgabe zu markieren. Insbesondere ist ein einzelnes Markierungsmittel für einen Zeitdatenstrang vorgesehen. Insbesondere ist jedes Zeitdatum des Zeitdatenstrangs markierbar. Ein Markierungsmittel kann dabei insbesondere als Hervorhebung, insbesondere als Leuchtmittel, als Steckmittel und/oder bevorzugt als Rahmen ausgebildet sein. Das Markierungsmittel, insbesondere ein Rahmen, ist dabei insbesondere von einem Material gebildet, das zumindest zu einem Großteil, insbesondere zumindest 50 %, vorteilhaft zumindest 70 %, vorzugsweise zumindest 90 %, des für einen Menschen sichtbaren Spektralbereichs von Licht eine Transparenz von weniger als 70 %, insbesondere weniger als 40 %, vorteilhaft weniger als 15 % und vorzugsweise weniger als 5 % aufweist. Insbesondere weist das Markierungsmittel zumindest einen Teilbereich auf, der zumindest teilweise, insbesondere zumindest 50 %, vorteilhaft zumindest 70 %, vorzugsweise zumindest 90 %, transparent ist. Ein Markierungsmittel kann insbesondere invers ausgebildet sein, wobei alle irrelevonten Zeitdaten markiert, insbesondere abgedeckt sind, so dass insbesondere ein einzelner Tag nicht markiert, insbesondere abgedeckt, ist. Unter "zerstörungsfrei" soll insbesondere verstanden werden, dass bei einem Herstellen und/oder einem Lösen einer Verbindung zwischen dem Markierungsmittel und dem Zeitdatenstrang Formen und Massen des Markierungsmittels und/oder des Zeitdatenstrangs zumindest im Wesentlichen unverändert bleiben. Darunter, dass das Markierungsmittel dazu vorgesehen ist, mit dem Zeitdatenstrang "verbunden" zu werden, soll insbesondere verstanden werden, dass der Zeitdatenstrang zumindest ein Verbindungsmittel, insbesondere für jedes Zeitdatum ein Verbindungsmittel, insbesondere eine Steckhülse, aufweist, das dazu vorgesehen ist, mit einem Verbindungsmittel des Markierungsmittels zu korrespondieren. Insbesondere ist das Markierungsmittel dazu vorgesehen, mit einem Formschluss und/oder einem Kroftschluss mit dem Zeitdatenstrang verbunden zu werden. Unter "vorgesehen" soll insbesondere speziell programmiert, ausgelegt und/oder ausgestattet verstanden werden. Es kann insbesondere eine Aufgabenplanung, beispielsweise eine Vorgabe von Terminen für eine durchzuführende Reinigung, Wartung oder Ähnliches und/oder ein Controlling erleichtert werden.

Es wird weiterhin vorgeschlagen, dass der zumindest eine Zeitdatenstrang zumindest teilweise, insbesondere zumindest 25 %, vorteilhaft zumindest 50 %, besonders vorteilhaft zumindest 70 %, vorzugsweise zumindest 90 %, aus wenigstens einem Polymer, insbesondere einem anorganischen Polymer, vorzugsweise einem organischen Polymer, also Kunststoff, gefertigt ist. Vorzugsweise handelt es sich bei dem Polymer um ein thermoplastisches oder um ein duroplastisches Polymer. Beispielhaft sollen hier genannt sein: Polyethylen (PE), Polypropylen (PP), Polyvinylchlorid (PCV), Polyethylenterephthalat (PET), Silikon und Teflon. Insbesondere ist der Zeitdatenstrang zumindest teilweise in einem Spritzgussverfahren hergestellt. Grundsätzlich sind jedoch auch Ausgestaltungen denkbar, die zumindest teilweise aus zumindest einem Metall, insbesondere Aluminium, Stahl, Edelstahl, und/oder zumindest teilweise aus Glas, insbesondere Quarzglas, und/oder zumindest teilweise aus Holz gebildet sind. Es kann insbesondere eine kostengünstige Ausführung erreicht werden.

In einer weiteren Ausgestaltung wird vorgeschlagen, dass zumindest der eine Zeitdatenstrang zumindest eine Vertiefung aufweist, in der zumindest eines der auf dem zumindest einen Zeitdatenstrang gezeigten Zeitdaten angeordnet ist. Vorzugsweise sind die Zeitdaten bildenden Symbole als Vertiefung ausgebildet und bilden ein Relief. Insbesondere weisen Vertiefungen eine maximale Tiefe von zumindest 0,1 mm, insbesondere zumindest 0,3 mm, vorteilhaft zumindest 1 mm, vorzugsweise zumindest 2 mm, bezüglich einem umgebenden Material auf. Insbesondere sind die Vertiefungen zumindest teilweise von einem Material ausgefüllt, das sich von dem die Vertiefung umgebenden Material, insbesondere in seiner Farbe, unterscheidet. Es kann insbesondere eine lange Haltbarkeit erreicht werden.

Vorteilhaft weist der zumindest eine Zeitdatenstrang zumindest eine Führungseinheit auf, die dazu vorgesehen ist, das Markierungsmittel zumindest in einem montierten Zustand zu führen. Insbesondere weist das Markierungsmittel zumindest ein Führungsmittel auf, das korrespondierend zu der Führungseinheit ausgebildet ist und dazu vorgesehen ist, das Markierungsmittel in der Führungseinheit zu führen. Vorzugsweise weist die Führungseinheit zumindest eine Schiene auf, die vorzugsweise zumindest im Wesentlichen parallel zu einer gedanklichen, die Zeitdaten verbindenden Linie angeordnet ist. Es kann insbesondere eine einfach zu bedienende Ausgestaltung erreicht werden.

Weiterhin wird vorgeschlagen, dass das Markierungsmittel ein erstes Fixiermittel aufweist, das zumindest eine Führungseinheit zumindest ein zweites Fixiermittel aufweist, das zu dem ersten Fixiermittel korrespondierend ausgebildet ist, und das erste und zweite Fixiermittel dazu vorgesehen sind, das Markierungsmittel in einer Relativposition entlang eines Freiheitsgrads der Führungseinheit zu fixieren. Insbesondere ist das zumindest zweite Fixiermittel einer der Zeitdaten zugeordnet. Insbesondere ist zumindest einem Großteil, insbesondere zumindest 50%, vorteilhaft zumindest 70%, vorzugsweise zumindest 90 %, der Zeitdaten, insbesondere jedem der Zeitdaten, ein zweites Fixiermittel zugeordnet. Insbesondere ist das erste oder das zweite Fixiermittel als Ausnehmung, insbesondere als Kerbe, und das jeweils andere Fixiermittel als Ausweitung, insbesondere als Nase, ausgebildet. Es kann insbesondere eine unbeabsichtigte Verstellung des Markierungsmittels erreicht werden.

Vorteilhaft ist zumindest eines der zweiten Fixiermittel durch einen Bediener aktivierbar und/oder deaktivierbar. Insbesondere weist der Zeitdatenstrang zumindest ein Mittel auf, das dazu vorgesehen ist, zumindest einmalig, insbesondere wiederholbar von einem Bediener entfernt und/oder eingefügt zu werden. Insbesondere weist der Zeitdatenstrang Sollbruchstellen auf, die eine Herstellung des zweiten Fixiermittels ermöglichen. Insbesondere ist zumindest ein Stellmittel, insbesondere ein Schiebemittel, vorgesehen, das dazu vorgesehen ist, ein als Ausnehmung ausgebildetes zweites Fixiermittel abzudecken, auszugleichen und/oder auszufüllen, um eine Wechselwirkung zwischen dem ersten und dem zweiten Fixiermittel zu vermeiden. Insbesondere kann ein Steckelement, das als als Ausweitung ausgebildetes zweites Fixiermittel dient, entfernt und/oder eingefügt werden, um eine Wechselwirkung mit dem ersten Fixiermittel zu vermeiden und/oder zu ermöglichen. Es kann insbesondere ein erhöhter Komfort erreicht werden, da das Markierungsmittel nur an Zeitdaten fixiert werden kann, für die eine Aufgabe vorgesehen ist.

In einer weiteren Ausgestaltung wird vorgeschlagen, dass das Markierungsmittel ein Federelement aufweist, das dazu vorgesehen ist, zumindest in einem montierten Zustand das Markierungsmittel gegen den Zeitdatenstrang zu verspannen. Unter einem "Federelement" soll insbesondere ein Element verstanden werden, das in einem normalen Betriebszustand entlang zumindest einer Raumrichtung in seiner Erstreckung um zumindest 0,5 mm, insbesondere zumindest 1 mm, vorteilhaft zumindest 2 mm, vorzugsweise zumindest 5 mm, elastisch veränderbar ist und das insbesondere eine von einer Veränderung der Erstreckung abhängige und vorzugsweise zu der Veränderung proportionale Gegenkraft erzeugt, die der Veränderung entgegenwirkt. Insbesondere ist das Federelement zu einer Rastverbindung vorgesehen, wobei es vorzugsweise mit dem ersten und/oder dem zweiten Fixiermittel zusammenwirkt. Insbesondere ist das Federelement mit dem ersten Fixiermittel einstückig ausgeführt. Unter "einstückig" soll insbesondere stoffschlüssig verbunden, wie beispielsweise durch einen Schweißprozess und/oder Klebeprozess usw, und besonders vorteilhaft angeformt verstanden werden, wie durch die Herstellung aus einem Guss und/oder durch die Herstellung in einem Ein- oder Mehrkomponentenspritzverfahren. Es kann insbesondere eine komfortable Bedienung erreicht werden.

Vorteilhaft weist die Vorrichtung zumindest eine Beschriftungsfläche auf. Insbesondere ist die zumindest eine Beschriftungsfläche von einer Oberfläche auf einem Grundkörper gebildet, der vorzugsweise einstückig mit dem Zeitdatenstrang ausgebildet ist. Vorzugsweise dient die Beschriftungsfläche zu einer Vergrößerung des Grundkörpers und somit einer, insbesondere zu einer Befestigung dienenden Klebefläche an einer Rückseite des Grundkörpers. Vorzugsweise erstreckt sich zumindest eine Beschriftungsfläche und/oder eine Reihe von Beschriftungsflächen zumindest im Wesentlichen parallel zu einer gedanklichen, die Zeitdaten verbindenden Linie. Es kann insbesondere ein erhöhter Komfort erreicht werden.

Weiterhin wird vorgeschlagen, dass die Beschriftungsfläche von einem Material gebildet ist, das es ermöglicht, eine Beschriftung zu löschen. Insbesondere ist auf den Ansatzkörper eine Folie eines solchen Materials aufgeklebt. Insbesondere handelt es sich bei dem Material um einen Kunststoff, insbesondere PET, der dazu vorgesehen ist, von einem löslichen, vorzugsweise abwischbaren, Folienschreiber beschriftet zu werden. Insbesondere weist der Zeitdatenstrang zumindest ein Befestigungsmittel auf, das dazu vorgesehen ist, ein Beschriftungsmittel, insbesondere einen Stift, vorzugsweise einen Folienstift, und/oder ein Löschmittel, insbesondere einen Schwamm oder ein Tuch, aufzunehmen. Es kann insbesondere eine erhöhte Flexibilität erreicht werden.

In einer weiteren vorgeschlagenen Ausgestaltung weist die Vorrichtung zumindest einen weiteren Zeitdatenstrang auf. Der weitere Zeitdatenstrang weist vorzugsweise eine zu dem zumindest einen Zeitdatenstrang verschiedene Folge von Zeitdaten auf. Insbesondere zeigt einer der Zeitdatenstränge Tage eines Monats, also insbesondere ganze Zahlen von 1 bis 31, und ein anderer Zeitdatenstrang Monate eines Jahres. Die zwei Zeitdatenstränge sind vorzugsweise auf einem gemeinsamen Grundkörper angeordnet. Es kann insbesondere eine erhöhte Flexibilität erreicht werden.

In einer weiteren Ausgestaltung der Erfindung wird vorgeschlagen, dass die Vorrichtung zumindest ein, vorzugsweise elektronisches, Anzeigemittel und zumindest eine Steuereinheit aufweist, die dazu vorgesehen ist, eine Anzeige des Anzeigemittels zu steuern. Unter einem "Anzeigemittel" soll insbesondere ein Mittel verstanden werden, das zumindest zwei Anzeigezustände aufweist und in zumindest einem Anzeigezustand eine optische und/oder akustische Anzeige vermittelt und vorzugsweise ein für einen Menschen sichtbares und/oder hörbares Signal abgibt. Unter einem "optischen Anzeigemittel" soll insbesondere ein Leuchtmittel, vorzugsweise eine LED, und/oder eine, vorzugsweise zweifarbige, Displayeinheit, insbesondere eine Matrixdisplayeinheit, vorzugsweise ein LCD-Display, ein OLED-Display und/oder elektronisches Papiers (e-paper, E-Ink), verstanden werden. Unter einem "akustischen Anzeigemittel" soll insbesondere eine Einheit verstanden werden, die dazu vorgesehen ist, elektrische Energie in Schallenergie umzuwandeln. Insbesondere weist sie eine Elektronik auf, die dazu vorgesehen ist, eine Frequenz zwischen 0 Hz und 20 kHz, insbesondere zwischen 50 Hz und 8 kHz, vorzugsweise zwischen 200 Hz und 5 kHz, zu erzeugen und diese auf einen Tonerzeuger des akustischen Anzeigemittels, insbesondere auf eine Saite und/oder eine Membran, vorzugsweise auf einen Lautsprecher, zu übertragen. Es kann insbesondere ein erhöhter Komfort erreicht werden.

Vorteilhaft weist die Vorrichtung zumindest eine elektronische Eingabeeinheit auf. Die Eingabeeinheit ist insbesondere dazu vorgesehen, Eingabewerte an die Steuereinheit weiterzuleiten. Insbesondere ist die elektronische Eingabeeinheit als ein Tastenfeld, insbesondere als Tastatur, als Telefontastatur mit Buchstaben, oder als Nummernblock ausgebildet. Insbesondere ist die elektronische Eingabeeinheit als berührungsempfindliche Eingabeeinheit, insbesondere als berührungsempfindliches Display ausgebildet. Unter "berührungsempfindlich" soll insbesondere verstanden werden, dass bei einer Bedienung auf eine Bewegung von Bestandteilen der Bedieneinheit verzichtet werden kann. Insbesondere reagiert die berührungsempfindliche Bedieneinheit auf zumindest eine Kraft, die sich von einer mechanischen Kraft unterscheidet. Insbesondere wird durch eine bloße Anwesenheit eines Bedienmittels, insbesondere einem Finger eines Bedieners, ein Bedienereignis ausgelöst. Insbesondere ist die Steuereinheit dazu vorgesehen, durch eine Eingabe zumindest eine Aufgabe als erledigt anzuerkennen und eine Anzeige zumindest eines Anzeigemittels anzupassen. Insbesondere ist die Eingabeeinheit gemeinsam mit der Steuereinheit als Identifizierungssystem, insbesondere als RFID-Leseeinheit, ausgebildet, das dazu vorgesehen ist, eine Identität, insbesondere zumindest eines RFID-Transponders, der insbesondere in einer Schlüsselkarte eingebracht ist, zu bestimmen. Weiterhin sind Ausgestaltungen des Identifizierungssystems mit Identifizierung über Magnetstreifen und/oder Zifferncode und/oder weitere, dem Fachmann als geeignet erscheinende Merkmale denkbar. Es kann insbesondere eine erhöhte Flexibilität erreicht werden.

Insbesondere ist der Zeitdatenstrang zumindest teilweise als Anzeigemittel ausgebildet. Insbesondere ist hinter zumindest einem, vorzugsweise hinter jedem, der Zeitdaten, ein Leuchtmittel angeordnet, das zu einer Hinterleuchtung des Zeitdatums vorgesehen ist. Insbesondere ist zumindest eines, vorzugsweise jedes der Zeitdaten als Anzeigemittel, insbesondere als Leuchtmittel ausgebildet. Insbesondere sind die Zeitdaten als Anzeigeinhalt einer Displayeinheit ausgebildet. Vorzugsweise dient das Anzeigemittel dazu, zumindest ein aktuelles Zeitdatum anzuzeigen und/oder hervorzuheben. Es kann insbesondere ein erhöhter Komfort erreicht werden.

Weiterhin wird vorgeschlagen, dass die zumindest eine Beschriftungsfläche zumindest teilweise als Anzeigemittel ausgebildet ist. Insbesondere ist sie als Flächenleuchtmittel, insbesondere als Lumineszenzfolie, vorzugsweise als Elektrolumineszenzfolie, ausgebildet, die dazu vorgesehen ist, eine klassische Beschriftung zu hinterleuchten. Insbesondere ist die Beschriftungsfläche als Display ausgebildet und ist dazu vorgesehen, von der Steuereinheit vorgegebene Inhalte als Beschriftung darzustellen. Es kann insbesondere eine erhöhte Flexibilität erreicht werden.

In einer weiteren Ausgestaltung wird vorgeschlagen, dass das zumindest eine Markierungsmittel zumindest teilweise als Anzeigemittel ausgebildet ist. Vorzugsweise ist das Markierungsmittel als Leuchtmittel, insbesondere LED, ausgebildet. Insbesondere ist das Markierungsmittel als Reihe von LEDs ausgebildet, wobei jedem der Zeitdaten zumindest eine LED zugeordnet ist. Es kann insbesondere ein erhöhter Komfort erreicht werden.

Insbesondere weist die Vorrichtung zumindest eine Netzwerkschnittstelle auf. Unter einer "Netzwerkschnittstelle" soll insbesondere eine elektronische Einheit verstanden werden, die dazu vorgesehen ist, eine, vorzugsweise drahtlose, Verbindung, mit einem Netzwerk, vorzugsweise einem Datennetzwerk, herzustellen. Insbesondere ist das Netzwerk aus mehreren Netzwerktypen, die insbesondere unterschiedliche Übertragungsprotokolle, insbesondere TCP/IP, verwenden, aufgebaut. Die Netzwerkschnittstelle dient vorzugsweise zu einer Kommunikation der Steuereinheit mit zumindest einer Steuereinheit zumindest eines anderen Netzwerkteilnehmers, insbesondere einem PC und/oder einem Mobiltelefon, insbesondere einem Smartphone. Insbesondere ist die Steuereinheit dazu vorgesehen, an dem Zeitdatenstrang angegebene Aufgaben, Vorgänge und/oder Termine an ein Smartphone, einen Tablet-PC und/oder einen weiteren Netzwerkteilnehmer weiterzuleiten. Weiterhin wird erfindungsgemäß ein spezielles Programm, beispielsweise eine App, vorgeschlagen, das dazu vorgesehen ist, auf dem anderen Netzwerkteilnehmer ausgeführt zu werden, um mit der Steuereinheit des Zeitdatenstrangs zu kommunizieren. Insbesondere ist die Steuereinheit des Zeitdatenstrangs dazu vorgesehen, bei unterlassener Bedienung am Zeitdatenstrang, insbesondere einem unterlassenen Weitersetzen eines Markierungsmittels des Zeitdatenstrangs und/oder bei unterlassenem Abhaken einer zu erledigenden Aufgabe, zumindest eine Nachricht an zumindest einen anderen Netzwerkteilnehmer, insbesondere den Netzwerkteilnehmer eines Supervisors, zu versenden. Weiterhin ist es denkbar, dass mittels des speziellen Programms von dem anderen Netzwerkteilnehmer ausgehend zu erledigende Aufgaben, die an dem Zeitdatenstrang hinterlegt sind, einzusehen, zu bearbeiten und/oder neue Aufgaben anzulegen. Es kann insbesondere eine erhöhte Flexibilität erreicht werden.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Vorrichtung in einer Aufsicht in schematischer Darstellung,
- Fig. 2: einen Schnitt durch die erfindungsgemäße Vorrichtung in Figur 1 entlang der Linie II-II in schematischer Darstellung,
- Fig. 3: einen Schnitt durch die erfindungsgemäße Vorrichtung in Figur 2 entlang der Linie III-III in schematischer Darstellung,
- Fig. 4: ein alternatives Ausführungsbeispiel mit mehreren Zeitdatensträngen in schematischer Darstellung,
- Fig. 5: einen alternative Ausgestaltung der Erfindung in modularer Ausführung in schematischer Darstellung und
- Fig. 6: eine alternative Ausgestaltung einer erfindungsgemäße Vorrichtung mit einer Steuereinheit in schematischer Darstellung.

### Beschreibung der Ausführungsbeispiele

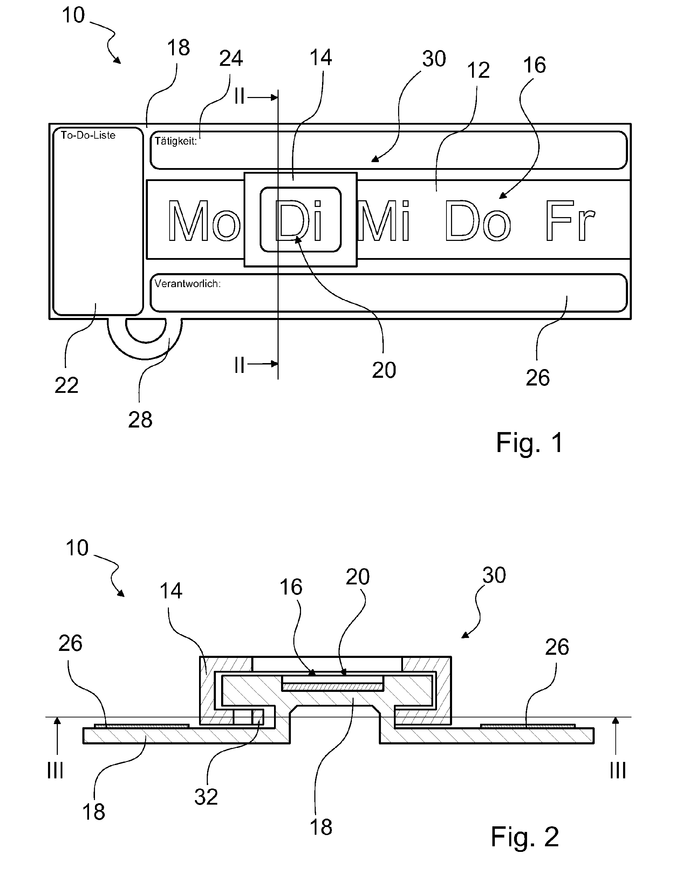

Figur 1 zeigt eine Vorrichtung 10 mit einem Zeitdatenstrang 12 und einem Markierungsmittel 14, wobei das Markierungsmittel 14 dazu vorgesehen ist, mit dem Zeitdatenstrang 12 verbunden zu werden und ein Zeitdatum 16 des Zeitdatenstrangs 12 zu markieren. Der Zeitdatenstrang 12 weist eine Folge von fünf Zeitdaten 16 auf. Die Zeitdaten 16 spiegeln die Tage einer Woche von Montag bis Freitag wider. Dabei sind diese jeweils mit zwei Buchstaben abgekürzt. Das Markierungsmittel 14 ist als Rahmen ausgebildet. In der Aufsicht ist eine Außenberandung des Rahmens als Rechteck ausgestaltet. Eine Innenberandung des Rahmens hingegen ist als Rechteck mit abgerundeten Ecken ausgebildet. Der Zeitdatenstrang 1 2 ist auf einem Grundkörper 18 angeordnet. Der Zeitdatenstrang 1 2 ist mit dem Grundkörper 18 einstückig ausgeführt. Der Grundkörper 18 mit dem Zeitdatenstrang 12 und das Markierungsmittel 14 sind aus PVC gefertigt. Die beiden Teile 18, 14 wurden jeweils in einem Spritzgussverfahren hergestellt. Der Grundkörper 18 mit dem Zeitdatenstrang 12 weist eine anthrazitgraue Färbung und das Markierungsmittel 14 eine grüne Färbung auf. Der Zeitdatenstrang 12 weist Vertiefungen 20 auf, in denen die auf dem Zeitdatenstrang 12 gezeigten Zeitdaten 16 angeordnet sind (vgl. Figur 2). Die Zeitdaten 16 sind als Vertiefungen 20 ausgebildet und bilden ein Relief. Die Vertiefungen 20 sind 1 mm tief. Die Vertiefungen 20 sind zur Hälfte mit einem Acryllack gefüllt. Der Acryllack weist eine weiße Färbung auf. Die Zeitdaten 16 sind regelmäßig entlang einer Geraden, einer Anordnungsgeraden, angeordnet. Der Zeitdatenstrang 12 ist als Leiste ausgebildet. Eine Leserichtung der Zeitdaten 16 auf dem Zeitdatenstrang 12 ist entlang der Anordnungsgeraden orientiert, wodurch eine horizontale Montage des Zeitdatenstrangs 12 suggeriert wird. Die Vorrichtung 10 weist drei Beschriftungsflächen 22, 24, 26 auf. Die Beschriftungsflächen 22, 24, 26 sind als PET-Folien ausgebildet und auf den Grundkörper 18 aufgeklebt. Die Beschriftungsflächen 22, 24, 26 weisen eine weiße Färbung auf. Eine erste Beschriftungsfläche 22 ist an einem kopfseitigen Ende, dem Ende, an dem die Folge der Zeitdaten 16 beginnt, angeordnet. Sie dient einer Notierung von Aufgaben, einer To-Do-Liste. Die Beschriftungsflächen 24, 26 sind jeweils parallel und auf unterschiedlichen Seiten der Anordnungsgeraden angeordnet. Sie dienen einer Notierung von Tätigkeiten und einer Notierung von Namen der Personen, die diese Tätigkeit zu erledigen haben. Die Beschriftungsflächen 22, 24, 26 sind mit PET von einem Material gebildet, das es ermöglicht, eine Beschriftung durch einen abwischbaren Stift zu löschen. An einer Unterkante der Vorrichtung 10 ist ein als Öse ausgebildetes Befestigungsmittel 28 angeordnet. Diese ist einstückig mit dem Grundkörper 18 ausgebildet. Die Öse 28 dient einer Befestigung eines abwischbaren Stifts und eines Schwamms. An einer Rückseite des Grundkörpers 18 ist eine von einem doppelseitigen Klebeband gebildete Klebefläche angeordnet, die eine Montage der Vorrichtung 10 an einem beliebigen Raumbestandteil, beispielsweise einer Wand, einer Tür, einem Schrank oder Ähnlichem, erlaubt. Der Zeitdatenstrang 12 weist eine Führungseinheit 30 auf, die dazu vorgesehen ist, das Markierungsmittel 14 in einem montierten Zustand zu führen.

Figur 2 zeigt einen Schnitt quer zum Zeitdatenstrang 12, entlang einer Linie II-II in Figur 1 und stellt eine Ausgestaltung der Führungseinheit 30 dar. Der Zeitdatenstrang 12 ist im Wesentlichen als Hutschiene ausgebildet. Das Markierungsmittel 14 umgreift den Zeitdatenstrang 12 und wird so entlang der Hutschiene parallel zu der Anordnungsgeraden in einem Freiheitsgrad geführt. Das Markierungsmittel 14 weist ein Federelement 32 auf, das dazu vorgesehen ist, in einem montierten Zustand das Markierungsmittel 14 gegen den Zeitdatenstrang 12 zu verspannen.

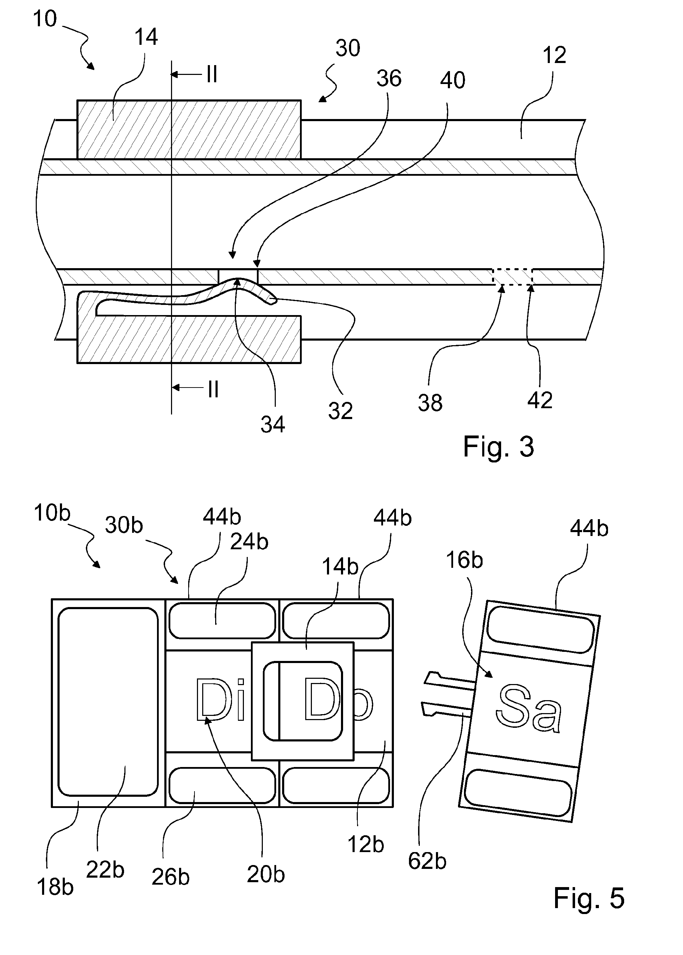

Figur 3 zeigt einen Schnitt entlang einer Linie III-III in Figur 2 und zeigt weitere Details der Führungseinheit 30. Das Markierungsmittel 14 weist ein erstes Fixiermittel 34 auf. Die Führungseinheit 30 weist für jede der Zeitdaten 16 ein zugeordnetes zweites Fixiermittel 36, 38 auf, das zu dem ersten Fixiermittel 34 korrespondierend ausgebildet ist, und das erste und zweite Fixiermittel 34, 36, 38 sind dazu vorgesehen, das Markierungsmittel 14 in einer Relativposition entlang dem Freiheitsgrad der Führungseinheit 30 zu fixieren. Das erste Fixiermittel 34 ist mit dem Federelement 32 einstückig ausgebildet. Das Federelement 32 ist als mit dem Markierungsmittel 14 einstückig ausgebildete Blattfeder ausgebildet. Die zweiten Fixiermittel 36, 38 sind durch einen Bediener aktivierbar. Die zweiten Fixiermittel 36, 38 sind als Ausnehmungen im Material des Zeitdatenstrangs 12 ausgebildet. Sie können durch einen Bediener aktiviert werden, indem dieser Material des Zeitdatenstrangs 12 an Sollbruchstellen 40, 42 aus dem Material herausbricht. Das Federelement 32 ist zu einer Rastverbindung vorgesehen. Das erste Fixiermittel 34 ist mit dem Federelement 32 einstückig ausgebildet. Das Fixiermittel 34 ist als Wölbung des Federelements 32 ausgebildet und ist dazu vorgesehen, in die als Ausnehmung ausgebildeten Fixiermittel 36, 38 einzurasten. Durch leichten Kraftaufwand entlang des Freiheitsgrads kann das Markierungsmittel 14 aus der Relativposition herausbewegt werden, wobei das Federelement 32 gespannt wird.

Zu einer Bedienung werden in einem ersten Schritt durch eine autorisierte Person Aufgaben und dafür jeweils verantwortliche Personen auf den Beschriftungsflächen 22, 24, 26 notiert. Für Tage, an denen Aufgaben durchgeführt werden sollen, werden die Fixiermittel 36, 38 aktiviert. Die Vorrichtung wird zuvor oder bevorzugt darauf folgend in einem Sichtbereich montiert, also festgeklebt. Das als Schiebeschalter ausgebildete Markierungsmittel 14 wird an dem ersten relevanten Tag durch die Fixiermittel 34 und 36 bzw. 38 fixiert. Sind die an dem Tag vorgesehenen Aufgaben erledigt, wird das Markierungsmittel 14 zu einer nächsten Fixierungsposition geschoben.

Eine weitere Ausgestaltung der Erfindung weist einen Zeitdatenstrang auf, der mit einer Folge von Jahren beschriftet ist. Dieser dient dazu, Wartungsaufgaben zu planen. Weiterhin sind Ausgestaltungen denkbar, in denen die Zeitdaten derart beschriftet sind, das eine senkrechte oder schräge Montage, beispielsweise in einem Treppenhaus, bevorzugt ist. In einer weiteren Ausgestaltung, bevorzugt in Ausgestaltungen mit einer Anzahl an Zeitdaten größer als zehn, ist der Zeitdatenstrang als Kreisring oder als kreisringähnliche Figur mit ovalem Umfang ausgebildet, so dass das Markierungsmittel endlos endlang einer geschlossenen Bahn bewegt werden kann. Ebenso sind beliebige Befestigungsmittel, insbesondere Schrauben, Nägel oder Vergleichbares, denkbar, die den Grundkörper anstelle einer Klebefläche an einem Raumbestandteil befestigen. Es sind Ausgestaltungen denkbar, in denen das Markierungsmittel 14 als Fähnchen ausgebildet ist, das dazu vorgesehen ist, in Stecklöcher des Zeitdatenstrangs 12 gesteckt zu werden.

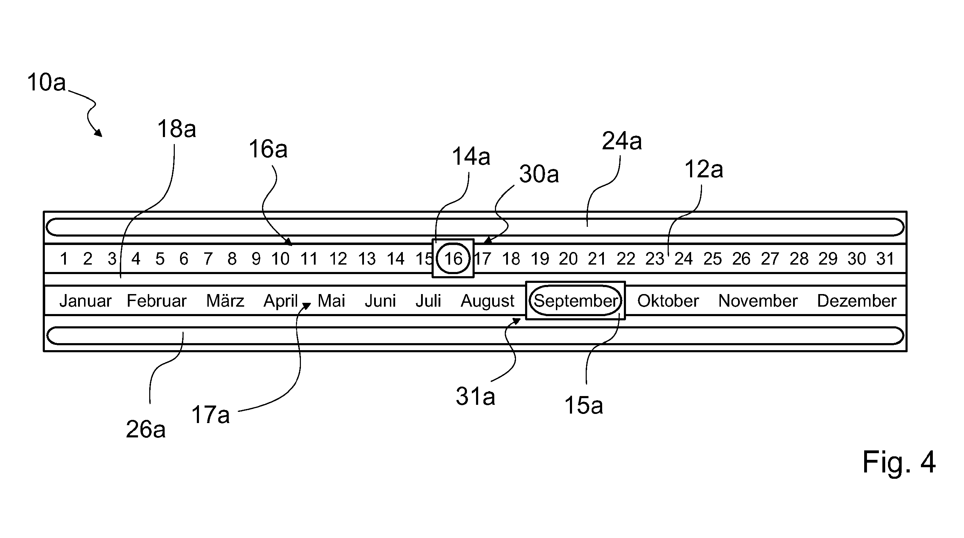

In den Figuren 4 bis 6 sind drei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Zeichnung und/oder die Beschreibung der anderen Ausführungsbeispiele, insbesondere der Figuren 1, 2 und 3, verwiesen werden kann. Zur Unterscheidung der Ausführungsbeispiele sind an die Bezugszeichen der Ausführungsbeispiele der Figuren 3 bis 6 die Bezugszeichen a, b und c angefügt.

In Figur 4 ist eine alternative Vorrichtung 10a mit einem ersten Zeitdatenstrang 1 2a und einem weiteren, zweiten Zeitstrang 13a und zwei Morkierungsmitteln 14a, 15a gezeigt. Die Zeitdatenstränge 12a, 13a sind parallel angeordnet. Die Zeitdatenstränge 12a, 1 3a sind jeweils als Leisten ausgebildet. Jedem der Zeitdatenstränge 12a, 13a ist ein Markierungsmittel 14a, 15a zugeordnet. Das Markierungsmittel 14a ist in einer Führungseinheit 30a und das Markierungsmittel 15a in einer Führungseinheit 31 a geführt. Der erste Zeitdatenstrang 12a ist mit Zeitdaten 16a beschriftet, die eine Folge von Tagen eines Monats darstellen. Die Zeitdaten 16a sind von den Zahlen 1 bis 31 gebildet. Der zweite Zeitdatenstrang 13a ist mit Zeitdaten 17a beschriftet, die eine Folge von Monaten eines Jahres darstellen. Die Zeitdaten 17a sind von den zwölf Monaten Januar bis Dezember in ausgeschriebener Form gebildet. Das Markierungsmittel 15a des zweiten Zeitdatenstrangs 13a ist größer ausgebildet, als das Markierungsmittel 14a des ersten Zeitdatenstrangs 12a. Die zwei Zeitdatenstränge 12a, 13a sind auf einem gemeinsamen Grundkörper 18a angeordnet. Die Zeitstränge 12a, 13a bilden mit den zugeordneten Markierungsmitteln 14a, 15a jeweils eine Führungseinheit 30a, 31 a. Jedem der Zeitdatenstränge 12a, 13a ist eine parallel verlaufende Beschriftungsfläche 24a, 26a zugeordnet. Diese können beispielsweise dazu genutzt werden, zu erledigende Aufgaben den Tagen zuzuordnen und Personen, die die Aufgaben zu erledigen haben, den Monaten zuzuordnen.

In weiteren Ausgestaltungen sind analog dem ersten Ausführungsbeispiel jedem der Zeitdatenstränge 12a, 13a zwei Beschriftungsflächen zugeordnet. Weitere Ausgestaltungen sind denkbar, in denen die Vorrichtung weitere, insbesondere drei, vier oder mehr, Zeitdatenstränge aufweist. Insbesondere sind die Zeitdatenstränge mit gleichartigen Folgen von Zeitdaten ausgebildet und dazu vorgesehen, unterschiedlichen Personen und/oder unterschiedlichen Aufgobenbereichen unterschiedliche Zeitdatenstränge zuzuordnen.

In Figur 5 ist eine weitere alternative Vorrichtung 10b mit einem Zeitdatenstrang 1 2b und einem Markierungsmittel 14b gezeigt. Der Zeitdatenstrang 12b ist von mehreren Modulen 44b gebildet. Jedes der Module 44b ist mit einem einzelnen Zeitdatum 16b beschriftet. Die Zeitdaten 16b sind von Tagen einer Woche gebildet. Ein erstes Modul 44b ist mit einem Grundkörper 1 8b verbunden. Weitere Module 44b sind miteinander und mit dem ersten Modul 44b verbunden. Verbindungen zwischen den Modulen 44b bzw. zwischen dem ersten Modul 44b und dem Grundkörper 18b sind als Steckverbindungen ausgebildet und über Rastmittel 62b hergestellt. Die Zeitdaten 16b, die auf den Modulen 44b angezeigt sind, bilden die Reihe Dienstag, Donnerstag, Samstag. Die Vorrichtung 10b weist modulübergreifend eine Führungseinheit 30b auf, in der das Markierungsmittel 14b geführt ist. Jedes der Module 44b weist zwei Beschriftungsflächen 24b, 26b auf. Die Beschriftungsflächen 24b, 26b mehrerer Module 44b bilden eine parallel zum Zeitdatenstrang 12b angeordnete Beschriftungsreihe. Auf dem Grundkörper 18b ist eine einzelne Beschriftungsfläche 22b angeordnet. Durch die modulare Bauweise ist es einem Bediener möglich, lediglich die benötigten Zeitdaten 16b in die Vorrichtung 10b einzubringen. Ein Grundset, aus dem ein Bediener nach einem Kauf geeignete Module 44b wählen kann, umfasst beispielsweise jeden Tag einer Woche, jeden Tag eines Monats oder jeden Monat eines Jahres jeweils zumindest einmal. Es sind Erweiterungssets denkbar, die zusätzliche Module 44b und/oder zusätzliche Markierungsmittel zur Verfügung stellen.

In Ausführungen mit als Steckmittel ausgebildeten Morkierungsmitteln 14 ist es auch denkbar, dass die Module 44b kettenartig, beweglich zueinander verbunden sind.

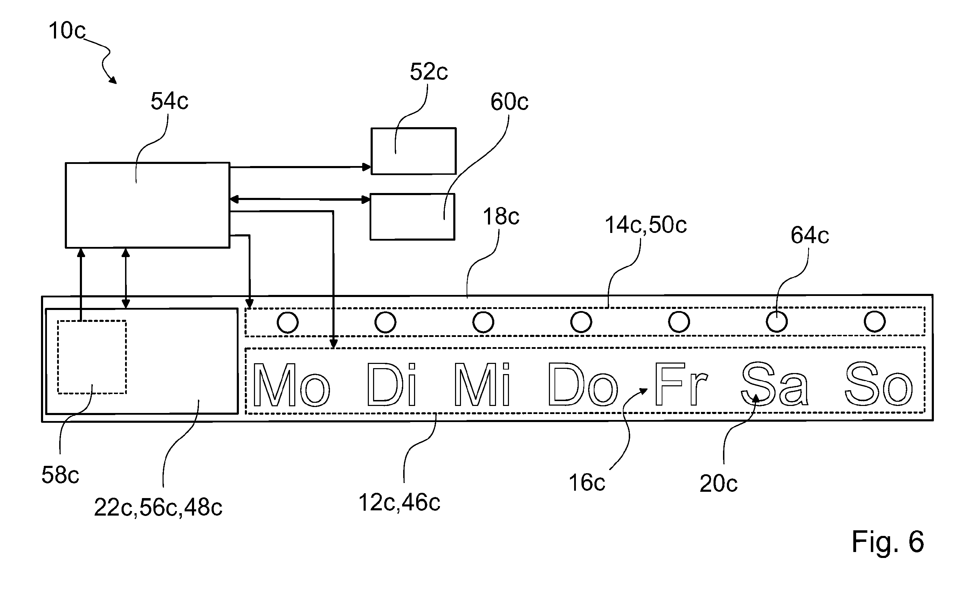

In Figur 6 ist eine weitere alternative Vorrichtung 10c mit einem Zeitdatenstrang 1 2c und einem Markierungsmittel 14c dargestellt. Der Zeitdatenstrang 1 2c weist sieben Zeitdaten auf, die die Tage einer Woche darstellen. Die Vorrichtung 10c weist weiterhin vier Anzeigemittel 46c, 48c, 50c, 52c und eine Steuereinheit 54c auf, die dazu vorgesehen ist, Anzeigen der Anzeigemittel 46c, 48c, 50c, 52c zu steuern. Die Vorrichtung 10c weist zwei elektronische Eingabeeinheiten 56c, 58c auf. Der Zeitdatenstrang 1 2c ist teilweise als Anzeigemittel 46c ausgebildet. Der Zeitdatenstrang 1 2c weist als LEDs ausgebildete Leuchtmittel 64c auf, die jeweils hinter Zeitdaten 16c angeordnet sind und dazu vorgesehen sind, das aktuelle Zeitdatum, das die Steuereinheit 54c über einen Zeitgeber feststellt, zu hinterleuchten.

Die Vorrichtung 10c weist eine Beschriftungsfläche 22c auf. Die Beschriftungsfläche 22c ist als Anzeigemittel 48c und elektronische Eingabeeinheit 56c ausgebildet. Die Beschriftungsfläche 22c ist als berührungsempfindliches Display ausgebildet. Über die Beschriftungsfläche 22c sind Eingaben über zu erledigende Aufgaben und verantwortliche Personen möglich. Weiterhin ist die Beschriftungsfläche 22c dazu vorgesehen, eine Liste von Menupunkten oder zu erledigenden Aufgaben anzuzeigen. Mittels Touch-Slider-Eingabe kann die angezeigte Liste gescrollt werden. Die elektronische Eingabeeinheit 58c ist als RFID-Leseeinheit ausgebildet. Die Eingabeeinheit 58c ist versteckt hinter der Beschriftungsfläche 22c angeordnet. Wird eine RFID-Karte einer für eine Aufgabe verantwortlichen Person an der Beschriftungsfläche 22c vorbeigeführt, wird ein Lesevorgang der RFID-Leseeinheit durch einen Signalton des akustischen Anzeigemittels 52c quittiert. Sind für die Person mehrere Aufgaben vorgesehen, wird die Person dazu aufgefordert, die erledigte Aufgabe auf der Beschriftungsfläche 22c auszuwählen. Die gewählte Aufgabe wird auf der Beschriftungsfläche 22c als erledigt markiert. Das Markierungsmittel 14c ist als Anzeigemittel 50c ausgebildet. Das Markierungsmittel 14c ist von einer Reihe von als LEDs ausgebildeten Leuchtmitteln gebildet, die in zwei unterschiedlichen Farben Licht erzeugen können. Jedem der Zeitdaten 16c ist dabei eine LED zugeordnet. Sind einem Zeitdatum 16c Aufgaben zugeordnet, leuchtet die LED in einer Farbe, beispielsweise rot. Sind alle Aufgaben eines Zeitdatums 16c erledigt, leuchtet sie in einer anderen Farbe, beispielsweise grün. LEDs zu Zeitdaten 16c, an denen keine Aufgaben geplant sind, sind abgeschaltet. Weiterhin weist die Vorrichtung 10c eine Netzwerkschnittstelle 60c auf. Die Netzwerkschnittstelle 60c ist als WLAN-Schnittstelle ausgebildet. Die Netzwerkschnittstelle 60c ermöglicht eine Verwaltung der Aufgabenplanung per Verwaltungsprogramm von einem PC oder beispielsweise per App von einem Mobiltelefon aus. Des Weiteren können Daten darüber abgefragt werden, wer welche Aufgaben erledigt hat oder noch nicht.

Aufgrund des höheren Leistungsbedarfs ist die Vorrichtung in einer Ausgestaltung mit WLAN, in der ohnehin ein Stromversorgungs-Netzteil nötig ist, vorzugsweise zusätzlich dazu vorgesehen, als Repeater, also als Verstärker für ein WLAN-Netz, zu dienen.

In einer Ausgestaltung, in der auf WLAN oder gar auf die Netzwerkschnittstelle 60c und/oder einen Teil der Leuchtmittel der Anzeigemittel 46c, 50c verzichtet wird und/oder ein Anzeigemittel 48c der Beschriftungsfläche 22c als wenig energielastiges elektronisches Papier ausgebildet ist, ist eine Energieversorgung über Photovoltaik, also beispielsweise kleine, eventuell organische, Solorzellen, denkbar.

Es sind kombinierte Ausgestaltungen der Ausführungsbeispiele denkbar. Beispielsweise kann eine Vorrichtung mit Steuereinheit mit einem mechanischen, beispielsweise als Rahmen ausgebildeten Markierungsmittel ausgestattet sein, das in einer Führungseinheit geführt wird. Insbesondere weist eine derartige Vorrichtung Aktoren auf, die auf Ansteuerung durch die Steuereinheit Fixiermittel des Zeitdatenstrangs aktivieren oder deaktivieren. Insbesondere können Sensoren vorgesehen sein, die eine Position des Markierungsmittels bestimmen. Wenn das Markierungsmittel aus seiner Fixierposition entfernt wird, während noch wenigstens eine Aufgabe der Aufgabenplanung besteht, ertönt ein Warnton. Ebenso sind modularisierte Ausführungen analog Figur 5 denkbar.

### Bezugszeichen

- 10: Vorrichtung
- 12: Zeitdatenstrang
- 13: Zeitdatenstrang
- 14: Markierungsmittel
- 15: Markierungsmittel
- 16: Zeitdatum
- 17: Zeitdatum
- 18: Grundkörper
- 20: Vertiefung
- 22: Beschriftungsfläche
- 24: Beschriftungsfläche
- 26: Beschriftungsfläche
- 28: Befestigungsmittel
- 30: Führungseinheit
- 31: Führungseinheit
- 32: Federelement
- 34: Fixiermittel
- 36: Fixiermittel
- 38: Fixiermittel
- 40: Sollbruchstelle
- 42: Sollbruchstelle
- 44: Modul
- 46: Anzeigemittel
- 48: Anzeigemittel
- 50: Anzeigemittel
- 52: Anzeigemittel
- 54: Steuereinheit
- 56: elektronische Eingabeeinheit
- 58: elektronische Eingabeeinheit
- 60: Netzwerkschnittstelle
- 62: Rastmittel
- 64: Leuchtmittel

## Patentansprüche

1. Vorrichtung mit zumindest einem Zeitdatenstrang (12; 12a, 13a; 1 2b; 12c) und zumindest einem Markierungsmittel (14; 14a, 15a; 14b; 14c), wobei das zumindest eine Markierungsmittel (14; 14a, 15a; 14b; 14c) dazu vorgesehen ist, mit dem zumindest einen Zeitdatenstrang (12; 12a, 13a; 12b; 12c) verbunden zu werden und/oder zumindest ein Zeitdatum (16; 16a, 17a; 16b; 16c) des Zeitdatenstrangs (12; 12a, 13a; 1 2b; 12c) zu markieren.

2. Vorrichtung nach Anspruch 1, **dadurch gekennzeichnet, dass** der zumindest eine Zeitdatenstrang (12; 12a, 13a; 12b; 12c) zumindest teilweise aus wenigstens einem Polymer gefertigt ist.

3. Vorrichtung nach einem der vorhergehenden Ansprüche, **dadurch gekennzeichnet, dass** zumindest der eine Zeitdatenstrang (12; 12a, 13a; 1 2b; 12c) zumindest eine Vertiefung (20; 20a; 20b) aufweist, in der zumindest eines der auf dem zumindest einen Zeitdatenstrang (12; 12a, 13a; 12b; 12c) gezeigten Zeitdaten (16; 16a, 17a; 16b; 16c) angeordnet ist.

4. Vorrichtung nach einem der vorhergehenden Ansprüche, **dadurch gekennzeichnet, dass** der zumindest eine Zeitdatenstrang (12; 12a, 13a; 1 2b; 12c) zumindest eine Führungseinheit (30; 30a, 31 a; 30b) aufweist, die dazu vorgesehen ist, das Markierungsmittel (14; 14a, 15a; 14b; 14c) zumindest in einem montierten Zustand zu führen.

5. Vorrichtung nach Anspruch 4, **dadurch gekennzeichnet, dass** das Markierungsmittel (14; 14a, 15a; 14b; 14c) ein erstes Fixiermittel (34) aufweist, dass die zumindest eine Führungseinheit (30; 30a, 31 a; 30b) und zumindest ein zweites Fixiermittel (36, 38) aufweist, das zu dem ersten Fixiermittel (32) korrespondierend ausgebildet ist, und dass das erste und zweite Fixiermittel (34, 36, 38) dazu vorgesehen sind, das Markierungsmittel (14; 1 4a, 15a; 14b; 14c) in einer Relativposition entlang eines Freiheitsgrads der Führungseinheit (30; 30a, 31a; 30b) zu fixieren.

6. Vorrichtung nach Anspruch 5, **dadurch gekennzeichnet, dass** zumindest eines der zweiten Fixiermittel (36, 38) durch einen Bediener aktivierbar und/oder deaktivierbar ist.

7. Vorrichtung nach einem der vorhergehenden Ansprüche, **dadurch gekennzeichnet, dass** das Markierungsmittel (14; 14a, 15a; 14b; 14c) ein Federelement (32) aufweist, das dazu vorgesehen ist, zumindest in einem montierten Zustand das Markierungsmittel (14; 14a, 15a; 14b) gegen den Zeitdatenstrang (12; 12a, 13a; 12b; 12c) zu verspannen.

8. Vorrichtung nach Anspruch 7, **dadurch gekennzeichnet, dass** das Federelement (32) zu einer Rastverbindung vorgesehen ist.

9. Vorrichtung nach einem der vorhergehenden Ansprüche, **gekennzeichnet durch** zumindest eine Beschriftungsfläche (22, 24, 26; 24a, 26a; 22b, 24b, 26b; 22c).

10. Vorrichtung nach Anspruch 9, **dadurch gekennzeichnet, dass** die Beschriftungsfläche (22, 24, 26; 24a, 26a; 22b, 24b, 26b; 22c) von einem Material gebildet ist, das es ermöglicht, eine Beschriftung zu löschen.

11. Vorrichtung nach einem der vorhergehenden Ansprüche, **gekennzeichnet durch** zumindest einen weiteren Zeitdatenstrang (13a).

12. Vorrichtung nach Anspruch 11, **dadurch gekennzeichnet, dass** zumindest die zwei Zeitdatenstränge (12a, 13a) auf einem gemeinsamen Grundkörper (18a) angeordnet sind.

13. Vorrichtung nach einem der vorhergehenden Ansprüche, **gekennzeichnet durch** zumindest ein Anzeigemittel (46c, 48c, 50c, 52c) und zumindest eine Steuereinheit (54c), die dazu vorgesehen ist, eine Anzeige des zumindest einen Anzeigemittels (46c, 46c, 48c, 50c, 52c) zu steuern.

14. Vorrichtung nach Anspruch 13, **gekennzeichnet durch** zumindest eine elektronische Eingabeeinheit (56c, 58c).

15. Vorrichtung zumindest nach Anspruch 13, **dadurch gekennzeichnet, dass** der Zeitdatenstrang (12; 12a, 13a; 12b; 12c) zumindest teilweise als Anzeigemittel (46c, 48c, 50c, 52c) ausgebildet ist.

16. Vorrichtung zumindest nach Anspruch 13, **dadurch gekennzeichnet, dass** die zumindest eine Beschriftungsfläche (22, 24, 26; 24a, 26a; 22b, 24b, 26b; 22c) zumindest teilweise als Anzeigemittel (46c, 48c, 50c, 52c) ausgebildet ist.

17. Vorrichtung zumindest nach Anspruch 13, **dadurch gekennzeichnet, dass** das zumindest eine Markierungsmittel (14; 14a, 15a; 14b; 14c) zumindest teilweise als Anzeigemittel (46c, 48c, 50c, 52c) ausgebildet ist.

18. Vorrichtung zumindest nach Anspruch 13, **gekennzeichnet durch** zumindest eine Netzwerkschnittstelle (60c).

19. Verfahren zur Bedienung und/oder Steuerung einer Vorrichtung (10; 10a; 10b; 10c) nach einem der vorhergehenden Ansprüche.
